# EUROPÄISCHE PATENTANMELDUNG

(11) **EP 4 549 125 A1**
(43) Veröffentlichungstag der Anmeldung: **07.05.2025**
(21) Anmeldenummer: 24209664.2
(22) Anmeldetag: 29.10.2024
(51) Int. Cl.: B29C 45/27

(54) **DÜSENEINSATZ UND DÜSE FÜR EIN SPRITZGIESSWERKZEUG**

(30) Priorität: 30.10.2023 DE 102023129839
(71) Anmelder: Günther Heisskanaltechnik GmbH, 35066 Frankenberg (DE)
(72) Erfinder: Sommer, Siegrid, 35099 Burgwald (DE); Sommer, Stefan, 35099 Burgwald (DE); Günther, Herbert, 35108 Allendorf (DE); Schnell, Torsten, 35104 Lichtenfels (DE)
(74) Vertreter: Patentanwälte Olbricht Buchhold Keulertz

(57) **Zusammenfassung**

Die vorgestellte Erfindung betrifft einen Düseneinsatz (100) für ein Spritzgießwerkzeug (300), wobei der Düseneinsatz (100) umfasst:
- einen sich in dem Düseneinsatz (100) erstreckenden Zuleitungsabschnitt (101),
- eine Vielzahl Düsenspitzen (103), und
- eine Vielzahl Nebenkanäle (105),

wobei jeweilige Nebenkanäle (105) der Vielzahl Nebenkanäle (105) fluidleitend mit dem Zuleitungsabschnitt (101) gekoppelt sind,
wobei ein jeweiliger Nebenkanal (105) der Vielzahl Nebenkanäle (105) dazu konfiguriert ist, durch den Zuleitungsabschnitt (101) zugeführte fließfähige Masse aus einer jeweiligen Düsenspitze (103) der Vielzahl Düsenspitzen (103) auszuleiten.

## Beschreibung

Die vorgestellte Erfindung betrifft einen Düseneinsatz und eine Düse für ein Spritzgießwerkzeug sowie ein Spritzgießwerkzeug und ein Herstellungsverfahren gemäß den beigefügten Ansprüchen.

Düsen und Düseneinsätze für Spritzgießsysteme sind bspw. durch die DE 10 2010 013 859 A1 bekannt. Demnach besteht eine Düse aus einem Materialrohr und einem Düseneinsatz, die zusammen dazu konfiguriert sind, fließfähige Kunststoffmasse bei einer vorgegebenen Temperatur und relativ hohem Druck einem trennbaren Werkzeugblock (Formnest) zuzuführen.

Ein erstes Ende des Materialrohres wird in der Regel mit einem Verteiler verbunden, während ein dem ersten Ende gegenüberliegendes zweites Ende im Bereich einer sogenannten Vorkammer gegenüber einer Angussöffnung positioniert wird. Damit sich Kunststoffmasse in der Vorkammer nicht vorzeitig abkühlt, ist an dem zweiten Ende des Materialrohres der Düseneinsatz mit einer Anzahl Düsenspitzen ausgebildet. Die Düsenspitzen sind konisch geformt und werden für einen Spritzgießvorgang bis an eine jeweilige Angussöffnung herangeführt.

Zum parallelen Spritzgießen von mehreren Artikeln sind Mehrkavitätenwerkzeuge bekannt, die mehrere Kavitäten umfassen, die jeweils einen Artikel ausformen. Dabei wird in der Regel jede Kavität durch eine eigene Angussöffnung und eine Düsenspitze mit fließfähiger Masse versorgt.

Insbesondere bei Verwendung von Düsen mit mehreren Düsenspitzen und einem Regelkreis kann es zu einem inhomogenen Materialfluss kommen, der bspw. zur Bildung von Schlieren und Füllunterschieden und/oder einem Pfropfen im Bereich der Vorkammer führen kann. Derartige Phänomene können einen Artikel unbrauchbar machen und entsprechend zu erhöhtem Ausschuss führen.

Vor diesem Hintergrund ist es eine Aufgabe der vorgestellten Erfindung, einen Ausschuss beim Herstellen von Artikeln mit einem Spritzgießwerkzeug, insbesondere einem Mehrkavitätenwerkzeug, zu minimieren.

Es wird somit gemäß einem ersten Aspekt der vorgestellten Erfindung ein Düseneinsatz für ein Spritzgießwerkzeug vorgestellt.

Der vorgestellte Düseneinsatz umfasst einen sich in dem Düseneinsatz erstreckenden Zuleitungsabschnitt, eine Vielzahl Düsenspitzen und eine Vielzahl Nebenkanäle, wobei jeweilige Nebenkanäle der Vielzahl Nebenkanäle fluidleitend mit dem Zuleitungsabschnitt gekoppelt sind und wobei ein jeweiliger Nebenkanal der Vielzahl Nebenkanäle dazu konfiguriert ist, durch den Zuleitungsabschnitt zugeführte fließfähige Masse aus einer jeweiligen Düsenspitze der Vielzahl Düsenspitzen auszuleiten.

Die vorgestellte Erfindung basiert auf einem Düseneinsatz, d.h. einem zum Verbinden mit einem Materialrohr konfigurierten Bauteil.

Der Düseneinsatz umfasst mehrere Kanäle, die bspw. durch Bohrungen bereitgestellt werden. Alternativ kann der vorgestellte Düseneinsatz auch in einem generativen Herstellungsprozess, wie bspw. dem 3D-Druck hergestellt werden, bei dem die Kanäle ausgespart werden, so dass den Düseneinsatz bildendes Material um die Kanäle herum ausgeformt wird.

Die in dem Düseneinsatz ausgebildeten Kanäle sind dazu konfiguriert fließfähige Masse zu leiten und umfassen einen Zuleitungsabschnitt, der im Betrieb von einer Quelle mit fließfähiger Masse versorgt wird, und eine Vielzahl Nebenkanäle, die im Betrieb von dem Zuleitungsabschnitt mit fließfähiger Masse versorgt werden. Entsprechend mündet der Zuleitungsabschnitt in die Nebenkanäle bzw. ist mit diesen fluidleitend gekoppelt.

Zur fluidleitenden Kopplung des Zuleitungsabschnitts mit jeweiligen Nebenkanälen können die Nebenkanäle in den Zuleitungsabschnitt, bspw. in Strömungsrichtung nacheinander, in den Zuleitungsabschnitt eingreifen. Alternativ oder zusätzlich kann der Zuleitungsabschnitt in ein Reservoir münden, in eine Auswahl der Nebenkanäle oder alle Nebenkanäle münden. Dabei kann das Reservoir ein gegenüber dem Zuleitungsabschnitt größeres Volumen bzw. einen gegenüber dem Zuleitungsabschnitt größeren Querschnitt aufweisen, so dass das Reservoir als Puffer wirkt, der einen Materialfluss durch den Düseneinsatz homogenisiert.

Die fluidleitende Kopplung des Zuleitungsabschnitts mit den Nebenkanälen bedingt, dass durch den Zuleitungsabschnitt strömende Masse nicht durch den Zuleitungsabschnitt an sich und entsprechend nicht, wie im Stand der Technik üblich, aus einer zentralen Öffnung des Düseneinsatzes ausströmt.

Stattdessen ist in dem vorgestellten Düseneinsatz keine zentrale Öffnung vorgesehen, sondern eine Vielzahl an jeweiligen Düsenspitzen ausgebildete Öffnungen, so dass fließfähige Masse auf jeweilige Nebenkanäle des Düseneinsatzes aufgeteilt und an mehreren verschiedenen Stellen aus dem Düseneinsatz austritt.

Es hat sich in Versuchen überraschend gezeigt, dass die Verwendung eines Düseneinsatzes mit mehreren Öffnungen zum Austreten von fließfähiger Masse aus dem Düseneinsatz zu einem besonders homogenen Materialfluss, der insbesondere eine Bildung von Pfropfen im Vorkammerbereich minimiert. Ferner wurde festgestellt, dass der vorgestellte Düseneinsatz die Schlierenbildung minimiert und ein homogenes Ausformen eines Artikels in einem jeweiligen Werkzeug fördert. Zudem werden Füllunterschiede zwischen den jeweiligen Artikeln in einem Mehrkavitätenwerkzeug wirksam vermieden.

Es kann vorgesehen sein, dass jeder Nebenkanal der Vielzahl Nebenkanäle sich durch eine jeweilige Düsenspitze der Vielzahl Düsenspitzen erstreckt.

Durch einen jeweiligen sich durch eine jeweilige Düsenspitze erstreckenden Nebenkanal tritt fließfähige Masse aus der Düsenspitze aus bzw. tropft an der Düsenspitze ab, so dass die Masse bis zum äußersten Rand des Düseneinsatzes mit thermischer Energie aus dem Düseneinsatz versorgt wird und entsprechend heiß bleibt.

Es kann weiterhin vorgesehen sein, dass mindestens ein Nebenkanal der Vielzahl Nebenkanäle dazu konfiguriert ist, fließfähige Masse aus einer Seitenfläche einer jeweiligen Düsenspitze der Vielzahl Düsenspitzen auszuleiten.

Ein Austritt von fließfähiger Masse an einer Seitenfläche einer jeweiligen Düsenspitze, insbesondere an einer Außenfläche einer jeweiligen Düsenspitze, bewirkt einen Materialfluss durch einen Pfad zwischen der Düsenspitze und einer Vorkammer bzw. einer Wandung einer Werkzeugplatte. Entsprechend wird der Materialfluss durch einen Pfad mit einem besonders geringen Querschnitt unter entsprechend hohem Druck bzw. hoher Geschwindigkeit geleitet. Dies bedingt besonders hohe Scherkräfte in dem Material. Diese Scherkräfte innerhalb des Materials verhindern eine Bildung von Inhomogenitäten bzw. eine Agglomeration, wie bspw. einem Pfropfen, und mischen die fließfähige Masse mit sich selbst bzw. wälzen diese um.

Es kann weiterhin vorgesehen sein, dass die Seitenflächen der Düsenspitzen der Vielzahl Düsenspitzen auf einer Zylinderfläche liegen, die konzentrisch zu einer Mittelachse des Düseneinsatzes ausgerichtet ist.

Eine konzentrische Anordnung der Seitenflächen der Düsenspitzen ermöglicht eine besonders einfache Versorgung der Nebenkanäle mit fleißfähiger Masse durch einen zentralen bzw. mittig in dem Zylinder ausgeprägten Zuführbereich.

Es kann weiterhin vorgesehen sein, dass die Seitenflächen der Düsenspitzen der Vielzahl Düsenspitzen in axialer Richtung zur Mittelachse zumindest abschnittsweise eine Kontur aufweisen.

Eine Kontur, wie bspw. ein konischer Verlauf, ein abgestufter Außendurchmesser oder dergleichen, kann einen Abstand zwischen den Düsenspitzen bzw. dem Düseneinsatz und einer jeweiligen Angussöffnung minimieren. Dabei kann die Kontur bspw. einem Verlauf einer die Angussöffnung bildenden Ausnehmung entsprechend ausgebildet sein.

Es kann weiterhin vorgesehen sein, dass Nebenkanäle der Vielzahl Nebenkanäle gleich lang ausgebildet sind.

Gleichlange Nebenkanäle bedingen einen gleichmäßigen Materialfluss aus dem Düseneinsatz, so dass bspw. mehrere gleiche Artikel parallel in gleichem Tempo ausgeformt werden können.

Es kann weiterhin vorgesehen sein, dass Nebenkanäle der Vielzahl Nebenkanäle unterschiedlich lang ausgebildet sind.

Unterschiedlich lange Nebenkanäle ermöglichen unterschiedliche Materialflüsse aus dem Düseneinsatz, so dass bspw. eine Düsenspitze zeitlich vor einer anderen Düsenspitze des Düseneinsatzes Material ausleitet und bspw. unterschiedliche Artikel in einem Arbeitsgang ausgeformt werden können.

Es kann weiterhin vorgesehen sein, dass Nebenkanäle der Vielzahl Nebenkanäle symmetrisch zur Mittelachse des Düseneinsatzes verlaufen.

Symmetrisch zur Mittelachse des Düseneinsatzes verlaufende Nebenkanäle bedingen einen symmetrischen Materialfluss durch den Düseneinsatz, so dass eine symmetrische Ausformung mehrerer insbesondere gleicher Artikel erreicht werden kann.

Alternativ kann vorgesehen sein, dass Nebenkanäle der Vielzahl Nebenkanäle asymmetrisch zur Mittelachse des Düseneinsatzes verlaufen.

Asymmetrisch zur Mittelachse des Düseneinsatzes verlaufende Nebenkanäle ermöglichen einen asymmetrischen Materialfluss durch den Düseneinsatz, so dass eine asymmetrische Ausformung mehrerer insbesondere unterschiedlicher Artikel erreicht werden kann. Dabei können sich jeweiligen Nebenkanäle voneinander bspw. in Ihrem Verlauf bzw. ihrer Kontur, insbesondere ihrer Krümmung voneinander unterscheiden.

Weiterhin kann vorgesehen sein, dass Nebenkanäle der Vielzahl Nebenkanäle sich in ihrem Querschnitt voneinander unterscheiden.

Unterschiedliche Querschnitte jeweiliger Nebenkanäle bedingen einen unterschiedlichen Volumenstrom an fließfähiger Masse durch die verschiedenen Nebenkanäle, so dass bspw. verschiedene Artikel zeitgleich ausgeformt werden können.

Es kann weiterhin vorgesehen sein, dass Nebenkanäle der Vielzahl Nebenkanäle in einem spitzen Winkel zur Mittelachse des Düseneinsatzes verlaufen.

Ein spitzer Winkel eines jeweiligen Nebenkanals zur Mittelachse des Düseneinsatzes bedingt einen besonders homogenen Materialfluss, da ein in dem Zuführabschnitt wirkender Druck in die jeweiligen Nebenkanäle überführt werden kann.

Es kann weiterhin vorgesehen sein, dass der Düseneinsatz eine erste Dichtung umfasst, die dazu konfiguriert ist, den Düseneinsatz in radialer Richtung zur Mittelachse des Düseneinsatzes gegenüber einem Materialrohr abzudichten.

Die erste Dichtung kann bspw. an einem oberen Ende des Düseneinsatzes angeordnet sein, so dass ein Austreten von fließfähiger Masse in einen Zwischenbereich zwischen einem jeweiligen Materialrohr und dem Düseneinsatz durch die erste Dichtung verhindert wird.

Es kann weiterhin vorgesehen sein, dass der Düseneinsatz eine zweite Dichtung umfasst, die dazu konfiguriert ist, den Düseneinsatz in axialer Richtung zur Mittelachse gegenüber dem Materialrohr abzudichten.

Eine zweite Dichtung kann bspw. eine Fläche, die sich in axialer Richtung erstreckt, abdichten.

Es kann weiterhin vorgesehen sein, dass der Düseneinsatz mindestens zwei Düsenspritzen und mindestens zwei Nebenkanäle umfasst.

Insbesondere eine paarige bzw. gegenüberliegende Ausbildung von Nebenkanälen in jeweiligen Düsenspitzen hat sich als besonders geeignet zum Verhindern eines inhomogenen Materialflusses erwiesen.

Es kann weiterhin vorgesehen sein, dass der Düseneinsatz aus einem hochwärmeleitfähigen Material besteht.

Der vorgestellte Düseneinsatz kann aus einem hochwärmeleitfähigen Material, wie bspw. Bronze, Kupfer, Alu oder Stahl bestehen.

Ein hochwärmeleitfähiges Material, insbesondere ein Material mit einer Wärmleitfähigkeit λ > 100, bedingt einen besonders effizienten Wärmeübertrag aus dem Düseneinsatz in eine durch den Düseneinsatz und an jeweiligen Düsenspitzen entlang strömende Masse, so dass die Masse besonders lange auf einer vorgegebenen Temperatur bleibt.

Gemäß einem zweiten Aspekt betrifft die vorgestellte Erfindung eine Düse für ein Spritzgießwerkzeug.

Die vorgestellte Düse umfasst ein Materialrohr, eine sich durch das Materialrohr erstreckende Zuleitung zum Aufnehmen von fließfähiger Masse aus einer Quelle und eine mögliche Ausgestaltung des vorgestellten Düseneinsatzes.

Aufgrund des vorgestellten Düseneinsatzes ermöglicht die vorgestellte Düse einen besonders homogenen Materialfluss.

Es kann vorgesehen sein, dass der Düseneinsatz und das Materialrohr einen Monolith bilden.

Eine monolithische Düse bedingt einen besonders homogenen Wärmefluss durch die Düse, so dass durch die Düse strömende Masse gleichmäßig erwärmt wird.

Es kann weiterhin vorgesehen sein, dass der Düseneinsatz und das Materialrohr über eine Verbindungsschnittstelle verbunden sind.

Eine Verbindungsschnittstelle, wie bspw. ein Schraubgewinde oder eine mechanische Arretierung, ermöglicht einen Austausch des Düseneinsatzes, so dass das Materialrohr in dem Spritzgießwerkzeug verbleiben kann, wenn ein anderer Düseneinsatz erforderlich ist.

Es kann weiterhin vorgesehen sein, dass der Düseneinsatz im Bereich der Verbindungsschnittstelle einen Halsabschnitt ausbildet, der von dem Materialrohr umgeben ist.

Ein von dem Materialrohr umgebener Halsabschnitt des Düseneinsatzes bedingt einen hohen Übergang von thermischer Energie aus dem Materialrohr in den Düseneinsatz und entsprechend einen besonders homogenen Materialfluss durch den Düseneinsatz.

Es kann weiterhin vorgesehen sein, dass das Materialrohr im Bereich der Verbindungsschnittstelle einen Halsabschnitt ausbildet, der von dem Düseneinsatz umgeben ist.

Auch ein von dem Düseneinsatz umgebener Halsabschnitt des Materialrohres bedingt einen hohen Übergang von thermischer Energie aus dem Materialrohr in den Düseneinsatz und entsprechend einen besonders homogenen Materialfluss durch den Düseneinsatz.

Es kann weiterhin vorgesehen sein, dass das Materialrohr und der Düseneinsatz im Bereich der Verbindungsschnittstelle plan aufeinanderliegen.

Eine plane Auflagefläche zwischen Materialohr und Düseneinsatz ermöglicht ein schnelles und einfaches Trennen bzw. Wechseln des Düseneinsatzes.

Gemäß einem dritten Aspekt betrifft die vorgestellte Erfindung ein Spritzgießwerkzeug zur Verarbeitung einer fließfähigen Masse.

Das vorgestellte Spritzgießwerkzeug umfasst eine mögliche Ausgestaltung des vorgestellten Düseneinsatzes und eine Werkzeugplatte mit einer Vorkammer.

Es kann vorgesehen sein, dass die Düsenspitzen des Düseneinsatzes in der Vorkammer angeordnet sind.

Durch eine Anordnung der Düsenspitzen des vorgestellten Düseneinsatzes in der Vorkammer einer Werkzeugplatte wird eine Fließgeometrie von aus den Nebenkanälen austretendem Material durch die Form der Düsenspitzen und die Form der Vorkammer bestimmt.

Es kann weiterhin vorgesehen sein, dass jeweilige Nebenkanäle der Vielzahl Nebenkanäle des Düseneinsatzes in einer Seitenfläche einer jeweiligen Düsenspitze in einen Pfad münden, der sich zwischen der jeweiligen Düsenspitze und einer Wandung der Vorkammer erstreckt.

Ein Pfad, der sich zwischen einer jeweiligen Düsenspitze und einer Wandung einer jeweiligen Vorkammer erstreckt, zeigt in der Regel einen besonders kleinen Querschnitt und bedingt entsprechend hohe Scherkräfte innerhalb eines durch den Pfad strömenden Materialflusses, so dass Aggregationen in dem Materialfluss minimiert werden.

Ferner bedingt ein Pfad, der sich zwischen einer jeweiligen Düsenspitze und einer Wandung einer jeweiligen Vorkammer erstreckt, einen Übergang von thermischer Energie aus der Düsenspitze in Material, das in dem Pfad strömt, so dass das Material bis zum Ende der Düsenspitze erwärmt wird.

Es kann weiterhin vorgesehen sein, dass das Spritzgießwerkzeug ein Mehrkavitätenwerkzeug umfasst.

Ein Mehrkavitätenwerkzeug ermöglicht in Kombination mit dem vorgestellten Spritzgießwerkzeug eine parallele Herstellung einer Vielzahl besonders homogener Artikel.

Es kann weiterhin vorgesehen sein, dass das Spritzgießwerkzeug ein Familienwerkzeug umfasst.

Ein Familienwerkzeug ermöglicht in Kombination mit dem vorgestellten Spritzgießwerkezug eine parallele Herstellung einer Vielzahl besonders homogener und ggf. unterschiedlicher Artikel.

Gemäß einem vierten Aspekt betrifft die vorgestellte Erfindung ein Herstellungsverfahren zur Herstellung eines Artikels, bei dem ein Artikel mittels einer möglichen Ausgestaltung des vorgestellten Düseneinsatzes ausgeformt wird.

Aufgrund des vorgestellten Düseneinsatzes stellt das vorgestellte Herstellungsverfahren besonders homogen ausgeformte Artikel bereit und bedingt einen besonders geringen Ausschuss.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine mögliche Ausgestaltung des vorgestellten Spritzgießsystems mit einer möglichen Ausgestaltung der vorgestellten Düse und einer möglichen Ausgestaltung des vorgestellten Düseneinsatzes,
- Fig. 2: eine Detaildarstellung des Düseneinsatzes gemäß Fig. 1,
- Fig. 3: eine Detaildarstellung der Düse gemäß Fig. 1,
- Fig. 4: eine Detaildarstellung der Düse gemäß Fig. 3.

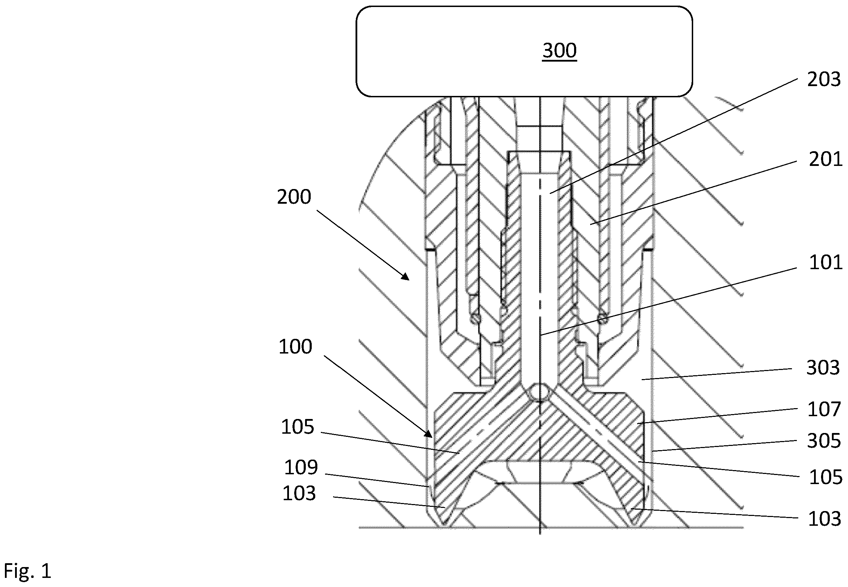

In Fig. 1 ist ein Spritzgießwerkzeug 300 dargestellt. Das Spritzgießwerkzeug 300 umfasst eine Düse 200 und eine Werkzeugplatte 301, die eine Vorkammer 303 ausbildet.

Die Düse 200 umfasst ein Materialrohr 201, eine sich durch das Materialrohr 201 erstreckende Zuleitung 203 und einen Düseneinsatz 100.

Der Düseneinsatz 100 umfasst einen sich durch den Düseneinsatz 100 erstreckenden Zuleitungsabschnitt 101, eine Vielzahl Düsenspitzen 103 und eine Vielzahl Nebenkanäle 105.

Jeweilige Nebenkanäle 105 sind fluidleitend mit dem Zuleitungsabschnitt 101 gekoppelt und dazu konfiguriert, aus einer Quelle durch den Zuleitungsabschnitt 101 zugeführte fließfähige Masse aus einer jeweiligen Düsenspitze 103 auszuleiten.

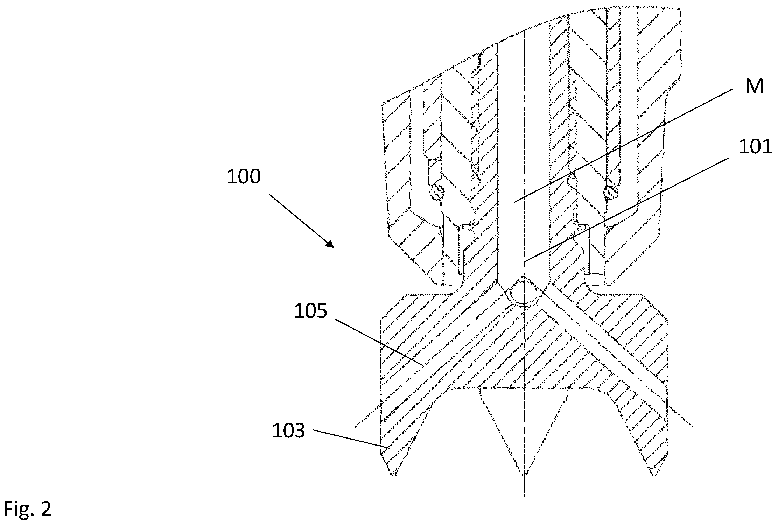

In Fig. 2 ist eine Detailansicht des Düseneinsatzes 100 gemäß Fig. 1 dargestellt.

Hier ist erkennbar, dass die Nebenkanäle 105 beispielhaft symmetrisch um eine Mittelachse M, des Düseneinsatzes 100 verlaufen und jeweils in einer Seitenfläche 107 einer jeweiligen Düsenspitze 103 münden, so dass die fließfähige Masse an den Seitenflächen 107 der Düsenspitzen 103 entlang durch einen Pfad 109 läuft und, dadurch bedingt, auf dem gesamten Weg durch den Pfad 109 entlang der Düsenspitze durch in dem Düseneinsatz 100 gespeicherte thermische Energie erwärmt wird.

Da der Pfad 109 zwischen der Düsenspitze 103 und einer Wandung der Vorkammer einen besonders geringen Querschnitt aufweist, bedingt der Pfad 109 hohe Scherkräfte in einem Materialfluss durch den Pfad 109, so dass Agglomerationen in dem Materialfluss verhindert werden.

Ferner bedingt der Pfad 109 einen Übergang von thermischer Energie aus der Düsenspitze 103 in Material, das in dem Pfad 109 strömt, so dass das Material bis zum Ende der Düsenspitze 103 erwärmt wird.

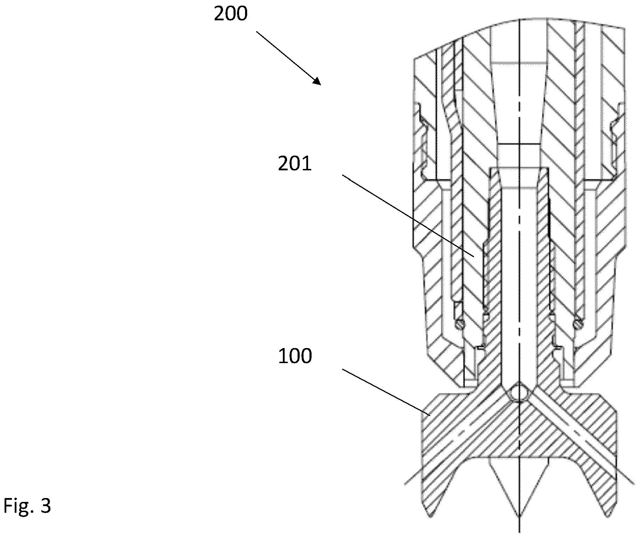

In Fig. 3 ist die Düse 200 um Detail dargestellt. Hier ist erkennbar, dass der Düseneinsatz 100 lösbar mit dem Materialrohr 201 verbunden ist, so dass der Düseneinsatz 100 gewechselt werden kann.

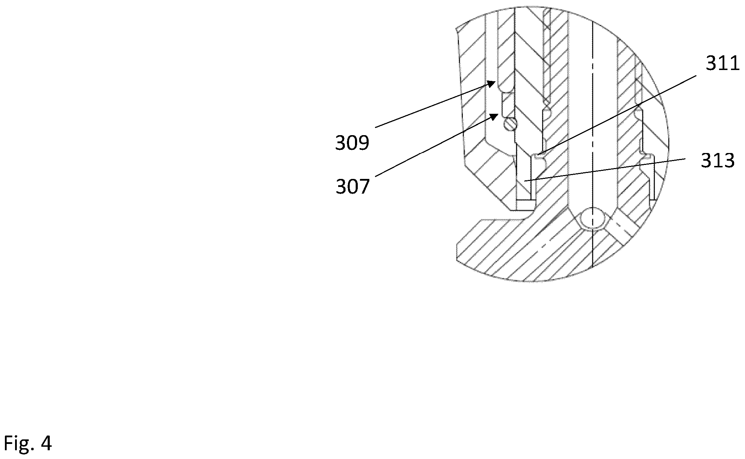

In Fig. 4 ist eine weitere Detailansicht des Düseneinsatzes 100 dargestellt. Hier sind eine Position einer Dickschichtheizung am Ende des Materialrohrs 201 durch Pfeil 307 und eine Position eines Temperaturfühlers durch Pfeil 309 dargestellt.

Ferner sind in Figur 4 optional Dichtungselemente 311 und 313 dargestellt.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 100: Düseneinsatz
- 101: Zuleitungsabschnitt
- 103: Düsenspitze
- 105: Nebenkanal
- 107: Seitenfläche
- 109: Pfad
- 200: Düse
- 201: Materialrohr
- 203: Zuleitung
- 300: Spritzgießwerkzeug
- 301: Werkzeugplatte
- 303: Vorkammer
- 305: Wandung
- 307: Pfeil
- 309: Pfeil
- 311: Dichtung
- 313: Dichtung
- M: Mittelachse

## Patentansprüche

1. Düseneinsatz (100) für ein Spritzgießwerkzeug (300),
wobei der Düseneinsatz (100) umfasst:
- einen sich in dem Düseneinsatz (100) erstreckenden Zuleitungsabschnitt (101),
- eine Vielzahl Düsenspitzen (103), und
- eine Vielzahl Nebenkanäle (105),
wobei jeweilige Nebenkanäle (105) der Vielzahl Nebenkanäle (105) fluidleitend mit dem Zuleitungsabschnitt (101) gekoppelt sind,
wobei ein jeweiliger Nebenkanal (105) der Vielzahl Nebenkanäle (105) dazu konfiguriert ist, durch den Zuleitungsabschnitt (101) zugeführte fließfähige Masse aus einer jeweiligen Düsenspitze (103) der Vielzahl Düsenspitzen (103) auszuleiten.

2. Düseneinsatz (100) nach Anspruch 1,
**dadurch gekennzeichnet,**
**dass** jeder Nebenkanal (105) der Vielzahl Nebenkanäle (105) sich durch eine jeweilige Düsenspitze (103) der Vielzahl Düsenspitzen (103) erstreckt.

3. Düseneinsatz (100) nach Anspruch 1 oder 2,
**dadurch gekennzeichnet,**
**dass** mindestens ein Nebenkanal (105) der Vielzahl Nebenkanäle (105) dazu konfiguriert ist, fließfähige Masse aus einer Seitenfläche (107) einer jeweiligen Düsenspitze (103) der Vielzahl Düsenspitzen (103) auszuleiten.

4. Düseneinsatz (100) nach Anspruch 3,
**dadurch gekennzeichnet,**
**dass** die Seitenflächen (107) der Düsenspitzen (103) der Vielzahl Düsenspitzen (103) auf einer Zylinderfläche liegen, die konzentrisch zu einer Mittelachse (M) des Düseneinsatzes (100) ausgerichtet ist.

5. Düseneinsatz (100) nach Anspruch 3 oder 4,
**dadurch gekennzeichnet,**
**dass** die Seitenflächen (107) der Düsenspitzen (103) der Vielzahl Düsenspitzen (103) in axialer Richtung zur Mittelachse (M) zumindest abschnittsweise eine Kontur aufweisen.

6. Düseneinsatz (100) nach einem der vorhergehenden Ansprüche,
**dadurch gekennzeichnet,**
**dass** Nebenkanäle (105) der Vielzahl Nebenkanäle (105) gleich lang oder unterschiedlich lang ausgebildet sind.

7. Düseneinsatz (100) nach einem der vorhergehenden Ansprüche,
**dadurch gekennzeichnet,**
**dass** Nebenkanäle (105) der Vielzahl Nebenkanäle (105) symmetrisch oder asymmetrisch zur Mittelachse (M) des Düseneinsatzes (100) verlaufen.

8. Düseneinsatz (100) nach einem der voranstehenden Ansprüche,
**dadurch gekennzeichnet,**
**dass** Nebenkanäle (105) der Vielzahl Nebenkanäle (105) sich in ihrem Querschnitt voneinander unterscheiden.

9. Düseneinsatz (100) nach einem der voranstehenden Ansprüche,
**dadurch gekennzeichnet,**
**dass** Nebenkanäle (105) der Vielzahl Nebenkanäle (105) in einem spitzen Winkel zur Mittelachse (M) des Düseneinsatzes (100) verlaufen.

10. Düseneinsatz (100) nach einem der voranstehenden Ansprüche,
**dadurch gekennzeichnet,**
**dass** der Düseneinsatz (100) eine erste Dichtung (311) umfasst, die dazu konfiguriert ist, den Düseneinsatz (100) in radialer Richtung zu einer Mittelachse (M) des Düseneinsatzes (100) gegenüber einem Materialrohr (201) abzudichten, und dass der Düseneinsatz (100) eine zweite Dichtung (313) umfasst, die dazu konfiguriert ist, den Düseneinsatz (100) in axialer Richtung zur Mittelachse (M) gegenüber dem Materialrohr (201) abzudichten.

11. Düseneinsatz (100) nach einem der voranstehenden Ansprüche,
**dadurch gekennzeichnet,**
**dass** der Düseneinsatz (100) mindestens zwei Düsenspritzen (103) und mindestens zwei Nebenkanäle (105) umfasst.

12. Düse (200) für ein Spritzgießwerkzeug (300),
wobei die Düse (200) umfasst:
- ein Materialrohr (201),
- eine sich durch das Materialrohr (201) erstreckende Zuleitung (203) zum Aufnehmen von fließfähiger Masse aus einer Quelle,
- einen Düseneinsatz (100) nach einem der Ansprüche 1 bis 11.

13. Düse (200) nach Anspruch 16,
**dadurch gekennzeichnet,**
**dass** der Düseneinsatz (100) und das Materialrohr (201) einen Monolith bilden, oder dass der Düseneinsatz (100) und das Materialrohr (201) über eine Verbindungsschnittstelle verbunden sind.

14. Düse (200) nach Anspruch 18,
**dadurch gekennzeichnet,**
**dass** der Düseneinsatz (100) im Bereich der Verbindungsschnittstelle einen Halsabschnitt ausbildet, der von dem Materialrohr (201) umgeben ist, und/oder dass das Materialrohr (201) im Bereich der Verbindungsschnittstelle einen Halsabschnitt ausbildet, der von dem Düseneinsatz (100) umgeben ist.

15. Spritzgießwerkzeug (300) zur Verarbeitung einer fließfähigen Masse,
wobei das Spritzgießwerkzeug (300) einen Düseneinsatz (100) nach einem der Ansprüche 1 bis 11 und eine Werkzeugplatte (301) mit einer Vorkammer (303) umfasst, wobei die Düsenspitzen (103) des Düseneinsatzes (100) in der Vorkammer (303) angeordnet sind.

16. Spritzgießwerkzeug (300) nach Anspruch 21 oder 22,
**dadurch gekennzeichnet,**
**dass** jeweilige Nebenkanäle (105) der Vielzahl Nebenkanäle (105) des Düseneinsatzes (100) in einer Seitenfläche (107) einer jeweiligen Düsenspitze (103) in einen Pfad (109) münden, der sich zwischen der jeweiligen Düsenspitze (103) und einer Wandung (305) der Vorkammer (303) erstreckt.
